# EUROPÄISCHE PATENTSCHRIFT

(11) **EP 1 457 724 B1**
(45) Veröffentlichungstag und Bekanntmachung des Hinweises auf die Patenterteilung: **30.05.2007**
(21) Anmeldenummer: 04380020.0
(22) Anmeldetag: 28.01.2004
(51) Int. Cl.: F16K 31/08, F16K 31/04

(54) **Ventil mit Motorantrieb**
Valve with motor actuation
Soupape avec commande à moteur

(30) Priorität: 10.03.2003 DE 20303764 U
(43) Veröffentlichungstag der Anmeldung: 15.09.2004
(73) Patentinhaber: Geyser Gastech S.A., 20570 Bergara (Gipuzkoa) (ES); Pauden Scientific & Technological Co. Ltd., Taipei, Sanchung City (TW)
(72) Erfinder: Huang, Chun-Chen, c/o Pauden Scientific & Tec, Sanchung, Taipei (TW)
(74) Vertreter: Fernandez Guzman, Juan

(56) Entgegenhaltungen:
- DE-A- 4 423 313
- DE-A- 19 516 054
- DE-U- 20 216 686
- US-A- 4 732 174

## Beschreibung

Die vorliegende Erfindung bezieht sich auf ein Ventil mit Motorantrieb, insbesondere auf ein Ventil mit Motorantrieb für Gasdurchflußsteuerung eines Heißwassergeräts, das im wesentlichen aus einem Ventilstößel und einem mit diesem Ventilstößel verbundenen Ventilzapfen besteht, wobei ein Magnetschalter außerhalb am Ventilhauptteil aufweist und ein mit diesem Ventilzapfen bewegbares Magnetelement im Ventilhauptteil aufweist, damit wenn der Ventilzapfen bis zu einem festgestellten optimalen Öffnungszustand bewegt ist, kann das Magnetelement mit dem Magnetschalter zusammenwirken, um den den Ventilzapfen antriebenen Motor abzustellen, damit der Ventilzapfen zu diesem festgestellten vorteilhaften Öffnungsstand halten zu können. Außerdem wird der Motor außerhalb am Ventilhauptteil angeordnet, damit alle elektrischen Schaltungen des Gasdurchflußventils mit der Gaszufuhr isoliert werden zu können, um eine sichere Steuerung des Gasdurchflusses eines Heißwassergeräts sicherstellen zu können.

Bekanntlich wird ein herkömmliches Magnetventil für Steuerung des Gasdurchflusses eines Heißwassergeräts im wesentlichen aus einer Magnetspule, einem festverbundenen Magnet, einem beweglichen Magnet und einem zusammenwirkenden Ventilzapfen besteht. Unter elektrisch eingeschaltetem Zustand der Magnetspule kann der bewegliche Magnet sich in Richtung auf den festverbundenen Magnet angezogen werden, damit der am beweglichen Magnet eingebaute Ventilzapfen auf die von der Ventilöffnung abgewandten Richtung bewegen kann, um die Ventilöffnung zu öffen, so daß das Gas vom Gaseinlaß über den geöffneten Durchgang zwischen dem Ventilzapfen und der Ventilöffnung und durch den Gasauslaß in einen Gasbrenner versorgt werden kann. Da die Öffnung der Ventilöffnung durch den Anzug der Magnetelemente beeinflußt wird, wird die Ventilöffnung dabei schnell geöffnet. Auf diesem Grund kann eine vorteilhafte gedämpfte Gasflußsteuerung leider nicht sichergestellt werden. Bei einer plötzlichen Öffnung der Ventilöffnung wird das Gas momentan ins Heißwassergerät (in den Gasbrenner) versorgt und bestünde es dabei eventuell eine Gefahr von Stichflamme.

Aus der gattunggemäßen DE-A-20216686U ist ein Ventil mit Motorantrieb für Gasdurchflußsteuerung gemäß dem Oberbegriff des Anspruchs 1 bekannt.

Außerdem kann der Zeitpunkt der Motorabstellung die Stellung des Ventilzapfens direkt beeinfließen. Deswegen muß ein Schalter an der angemessenen Stellung des Hubs des Ventilzapfens angeordnet werden, um die Bewegung des Motors zu steuern, damit wenn der Ventilzapfen bis zu einem festgestellten Öffnungszustand bewegt ist, kann das Magnetelement mit dem Magnetschalter zusammenwirken, um den Ventilzapfen antriebenen Motor abzustellen, damit der Ventilzapfen zu diesem festgestellten vorteilhaften Öffnungsstand halten zu können.

Aus US-A-4732174 ist eine änhliche Ventil mit Motorantrieb bekant, das ein Magnetschalter aufweist um die Bewegung des Motors zu steuern.

Der Erfindung liegt somit die wichtige Aufgabe zugrunde, ein Ventil mit Motorantrieb für Gasdurchflußsteuerung der eingangs geschilderten Art so auszugestalten, daß ein Ventilstößel im Ventilhauptteil mit einem Ventilzapfen verbindet und ein motorgetriebenes Wechselwirkungselement an der entsprechenden Stelle gegenüber dem Ventilstößel aufweist; daß ein erstes Magnetelement und ein zweites Magnetelement jeweils am Ventilstößel und am Wechselwirkungselement anordnet. Das Wechselwirkungselement kann durch den Motorantrieb in Richtung auf den Ventilzapfen bewegen. Sobald das Wechselwirkungselement bis zur Stellung der Berührung von o.g. beiden ersten und zweiten Magnetelementen erreicht, können diese beiden Magnetelementen sich durch die elektrische Einschaltung gegenseitig angezogen werden und das Wechselelement wird gleichzeitig dabei durch den Motorantrieb in die vom Ventilzapfen abgewandte Richtung bewogen. Auf diese Weise kann die Ventilöffnung allmählich für die Gaszufuhr zweckmäßig geöffnet.

Der Erfindung liegt eine weitere Aufgabe zugrunde, ein Ventil mit Motorantrieb für Gasdurchflußsteuerung der eingangs geschilderten Art so auszugestalten, daß ein Magnetschalter außerhalb am Ventilhauptteil aufweist und ein mit diesem Ventilzapfen bewegbares Magnetelement im Ventilhauptteil aufweist, damit wenn der Ventilzapfen bis zu einem festgestellten optimalen Öffnungszustand bewegt ist, kann das Magnetelement mit dem Magnetschalter zusammenwirken, um den den Ventilzapfen antriebenen Motor abzustellen, damit der Ventilzapfen zu diesem festgestellten vorteilhaften Öffnungsstand halten zu können.

Schließlich ist ein Ziel der Erfindung, ein Ventil mit Motorantrieb für Gasdurchflußsteuerung der eingangs geschilderten Art so auszugestalten, daß der Motor außerhalb am Ventilhauptteil anordnet, damit alle elektrischen Schaltungen des Gasdurchflußventils mit der Gaszufuhr isoliert werden zu können, um eine sichere Steuerung des Gasdurchflusses eines Heißwassergeräts sicherstellen zu können.

Die gestellten Aufgaben werden durch die in Schutzansprüchen angegebenen Merkmale gelöst.

In der Zeichnung ist der Erfindungsgegenstand beispielweise dargestellt. Es zeigen
Fig. 1 eine schematische Darstellung der Erfindung, wobei der Ventilzapfen die Ventilöffnung vollständig abgedeckt zeigt und
Fig. 2 eine schematische Darstellung der Erfindung, wobei der Ventilzapfen die Ventilöffnung vollständig geöffnet zeigt.

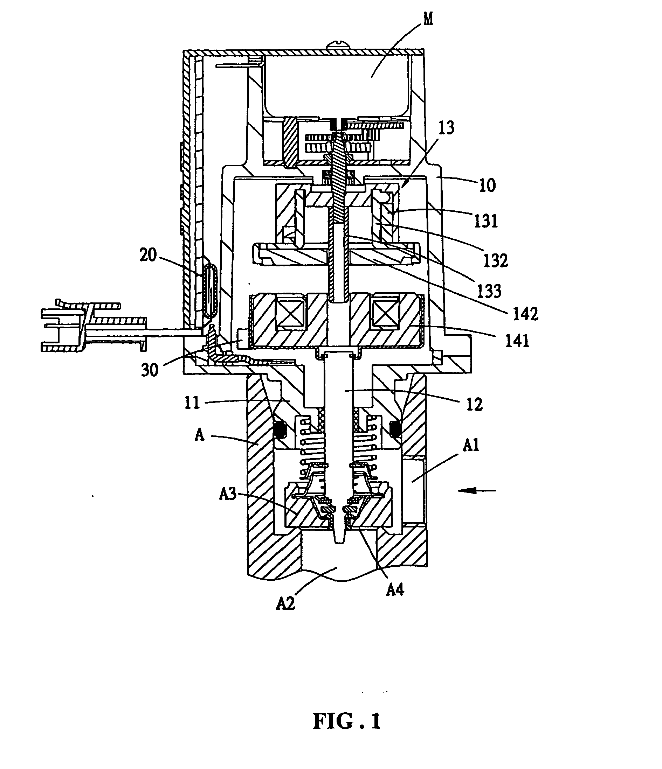

Ein erfindungsgemäßes Ventil mit Motorantrieb für Gasdurchflußsteuerung besteht im wesentlichen, wie in Fig. 1 ersichtlich, aus einem mit dem Gasventilgehäuse (A) verbundenen Ventilhauptteil (10), einem Anschlußstuzten (11), einem Ventilstößel (12), einem Ventilzapfen (A3) und einer Ventilöffnung (A4).

Der Ventilhauptteil (10) ist mit einem Anschlußstutzen (11) zur Verbindung mit dem Gasventilgehäuse (A) ausgestaltet. Das Gasventilgehäuse (A) umfasst einen Gaseinlaß (A1) und einen Gasauslaß (A2). Die Ventilöffnung (A4) ist im vom Gaseinlaß (A1) und gasauslaß (A2) ausgebildeten Durchgang angeordnet und kann durch den Ventilzapfen (A3) abgedeckt werden. Durch den Motorantrieb kann der Ventilzapfen (A3) in die von Ventilöffnung (A4) abgewandte Richtung getrennt bewegt werden, um den Durchgang zwischem dem Gaseinlaß (A1) und dem Gasauslaß (A2) zu öffnen, damit eine optimale Steuerung der Gaszufuhr zu ermöglichen.

Der Ventilstößel (12) ist im Ventilhauptteil (10) angeordnet und ist mit dem Ventilzapfen (A3) verbunden. Das durch einen Motor (M) angetriebene Wechselwirkungselement (13) ist an der angemessenen Stelle gegenüber dem Ventilstößel (12) angeordnet und besteht im wesentlichen aus einem Nockengehäuse (131), einer Antriebstange (133) und einer bewegbaren Nockenscheibe (132).

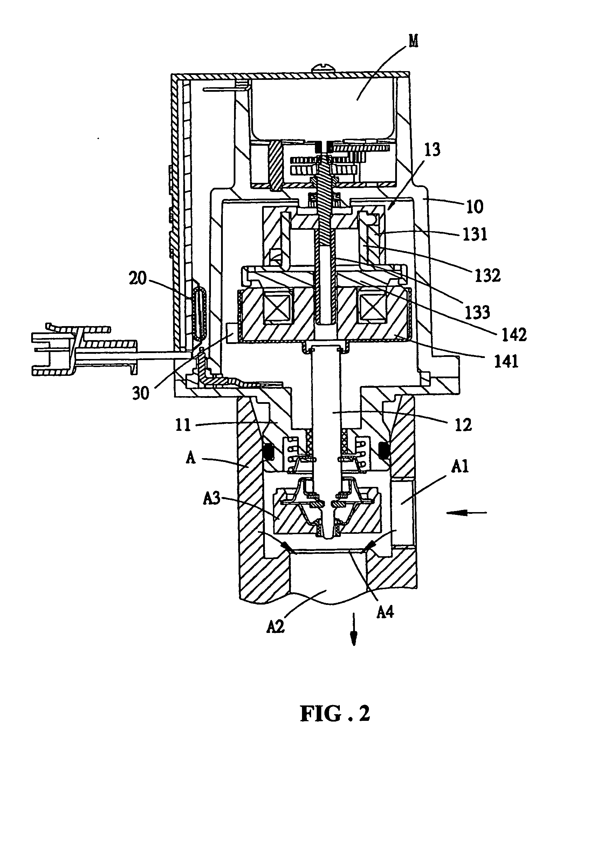

Außerdem kann ein erstes Magnetelement (141) und ein zweites Magnetelement (142) jeweils am Ventilstößel (12) und an der Nockenscheibe (132) des Wechselwirkungselements (13) anordnet werden, damit wenn das Wechselwirkungselement (13) durch den Antrieb des Motors (M) bis zur Stellung der Berührung von o.g. beiden ersten und zweiten Magnetelementen (141, 142) erreicht, können diese beiden Magnetelementen (141, 142) sich durch die elektrische Einschaltung gegenseitig angezogen werden (wie es in Fig. 2 darstellt) und das Wechselelement (13) kann gleichzeitig dabei durch den Motorantrieb (M) der Nockenscheibe (132) in die vom Ventilzapfen (A3) abgewandte Richtung bewogen. Auf diese Weise kann die Ventilöffnung (A4) allmählich für die Gaszufuhr optimal geöffnet.

Ferner ist ein Magnetschalter (20) in Form einer Nenneinschaltung außerhalb am Ventilhauptteil (10) anordenbar und ein mit diesem Ventilzapfen (A3) bewegbares Magnetelement (30) im Ventilhauptteil (10) anordnenbar, damit wenn der Ventilzapfen (A3) bis zu einem festgestellten Öffnungszustand bewegt ist, kann das Magnetelement (30) mit dem Magnetschalter (20) zusammenwirken, um den den Ventilzapfen (A3) antriebenen Motor abzustellen, damit der Ventilzapfen (A3) zu diesem festgestellten vorteilhaften Öffnungsstand halten zu können.

Die Vorteile der Erfindung besteht darin, daß den vom Ventilzapfen (A3) geöffneten Zustand durch Magnetwirkung erzielen werden zu können und zwar kann der Magnetschalter (20) außerhalb am Ventilhauptteil (10) angeordnet, damit alle elektrischen Schaltungen des Gasdurchflußventils mit der Gaszufuhr isoliert werden zu können, um eine sichere Steuerung des Gasdurchflusses eines Heißwassergeräts sicherstellen zu können. Es ist auch möglich, der Motor (M) außerhalb dem Ventilhauptteil (10) anzuordnen, damit alle elektrischen Schaltungen des Gasdurchflußventils mit der Gaszufuhr isoliert werden zu können, um eine sichere Steuerung des Gasdurchflusses eines Heißwassergeräts sicherstellen zu können.

Angesichts des obenstehenden schaft das Ventil mit Motorantrieb gute Gasdurchflußsteuerungseigenschaften, wobei der Ventilzapfen durch die Wirkung eines Magnetschalters einen optimalen festgestellten Öffnungszustand erzielen kann und gleichzeitig dabei den Motorantrieb abstellen zu können, damit der Ventilzapfen zu diesem festgestellten vorteilhaften Öffnungsstand halten zu können. Deshalb ist die vorliegende Erfindung praktisch zur Verwendung. Außerdem können alle elektrischen Schaltungen von einer Gaszufuhr isoliert angebracht werden, um eine sichere Steuerung des Gasdurchflusses eines Heißwassergeräts sicherstellen zu können.

## Patentansprüche

1. Ventil mit Motorantrieb für Gasdurchflußsteuerung umfassend einen Ventilstößel (12) und einen Ventilzapfen (A3), wobei der Ventilstößel (12) in einem Ventilhauptteil (10) mit dem Ventilzapfen (A3) verbunden ist und wobei ein motorgetriebenes Wechselwirkungselement (13) an der entsprechenden Stelle gegenüber dem Ventilstößel (12) angeordnet ist; wobei ein erstes Magnetelement (141) und ein zweites Magnetelement (142) jeweils am Ventilstößel (12) und am Wechselwirkungselement (13) angeordnet sind; wobei sich das Wechselwirkungselement (13) durch den Motorantrieb in Richtung auf den Ventilzapfen (A3) bewegen kann; wobei sobald das Wechselwirkungselement (13) die Stellung der Berührung der beiden ersten und zweiten Magnetelemente (141, 142) erreicht, diese beiden Magnetelemente (141, 142) durch eine elektrische Einschaltung gegenseitig angezogen werden und das Wechselwirkungselement (13) gleichzeitig dabei durch den Motorantrieb in die vom Ventilzapfen (A3) abgewandte Richtung bewegt wird und auf diese Weise die Ventilöffnung (A4) allmählich für die Gaszufuhr öffnet; **dadurch gekennzeichnet, dass** ein Magnetschalter (20) außerhalb am Ventilhauptteil (10) angeordnet ist und ein mit dem Ventilzapfen (A3) bewegbares drittes Magnetelement (30) im Ventilhauptteil (10) angeordnet ist, so dass, wenn der Ventilzapfen (A3) bis zu einem festgestellten Öffnungszustand bewegt ist, das dritte Magnetelement (30) mit dem Magnetschalter (20) zusammenwirkt, um den den Ventilzapfen (A3) antreibenden Motor (M)abzustellen, damit der Ventilzapfen (A3) in diesem festgestellten vorteilhaften Öffnungsstand gehalten werden kann, **dadurch gekennzeichnet, daß** das Wechselwirkungselement (13) aus einem Nockengehäuse (131) und einer an einer Antriebstange (133) entlang bewegbaren Nockenscheibe (132) besteht und das zweite Magnetelement (142) auf dieser Nockenscheibe angeordnet ist.

2. Ventil mit Motorantrieb für Gasdurchflußsteuerung nach Anspruch 1, **dadurch gekennzeichnet, daß** der Motor (M) außerhalb des Ventilhauptteils (10) angeordnet ist.

## Claims

1. Motor-operated valve for the control of a gas flow that includes a valve rocker (12) and a valve shaft (A3), the valve rocker (12) being housed in a valve body (10) connected to the valve shaft (A3) and an element of interaction (13) being operated by a motor arranged in the corresponding place opposite the valve rocker (12); a first magnetic element (141) and a second magnetic element (142) being arranged on the valve rocker (12) and on the element of interaction (13) respectively; the element of interaction (13) being able to move in the direction of the valve shaft (A3) by means of the operation of a motor; both magnetic elements (141, 142) mutually attracting each other by means of an electrical connection as soon as the element of interaction (13) reaches the contact position of the first and second magnetic element (141, 142) and the element of interaction (13) moving at the same time in the opposite direction to the valve shaft (A3) by means of the operation of a motor, the valve opening (A4) thus opening gradually for the supply of gas; wherein a magnetic switch (20) is arranged outside the valve body (10) and a third magnetic element (30) movable with the valve shaft (A3) is arranged on the valve body (10) so that, when the valve shaft (A3) is moved to an established state of aperture, the third magnetic element (30) interacts with the magnetic switch (20) to switch off the motor (M) that operates the valve shaft (A3) in order that the valve shaft (A3) can stop in this advantageous established state of aperture, **characterised in that** the element of interaction (13) is formed by a cam casing (131) and a cam disc (132) movable all the way along an operating rod (133) and **in that** the second magnetic element (142) is arranged on said cam disc.

2. Motor-operated valve for the control of a gas flow according to claim 1, **characterised in that** the motor (M) is arranged outside the body of the valve (10).

## Revendications

1. Vanne motorisée pour le contrôle du débit de gaz incorporant un culbuteur (12) et une tige (A3) ; le culbuteur (12) prend place dans un corps de vanne (10) relié à la tige (A3) et un élément d'interaction (13) entraîné par un moteur est disposé à l'opposé du culbuteur (12) ; un premier élément magnétique (141) et un deuxième élément magnétique (142) se trouvent disposés sur le culbuteur (12) et sur l'élément d'interaction (13), respectivement ; l'élément d'interaction (13) est déplacé en direction de la tige (A3) par l'entraînement motorisé ; les deux éléments magnétiques (141, 142) sont mutuellement attirés au moyen d'une connexion électrique dès que l'élément d'interaction (13) atteint la position de contact du premier et du deuxième élément magnétique (141, 142) et, en même temps, l'élément d'interaction (13) est déplacé en direction contraire à la tige (A3) par l'entraînement motorisé, ce qui produit une ouverture progressive de la soupape (A4) pour laisser passer le gaz ; elle se **caractérise par** la présence d'un interrupteur magnétique (20) disposé en dehors du corps de vanne (10) et d'un troisième élément magnétique (30) qui peut se déplacer avec la tige (A3) disposé sur le corps de vanne (10) de sorte que, lorsque la tige (A3) se déplace jusqu'à un état d'ouverture prédéfini, le troisième élément magnétique (30) interagit avec l'interrupteur magnétique (20) pour éteindre le moteur (M) qui commande la tige (A3) et pour que celle-ci (A3) puisse s'arrêter dans cet état d'ouverture avantageux prédéterminé ; elle se **caractérise en ce que** l'élément d'interaction (13) est formé d'une carcasse de came (131) et d'un disque de came (132) qui peut se déplacer tout le long d'une tige de commande (133) et par la disposition de ce deuxième élément magnétique (142) sur ce disque de came.

2. Vanne motorisée pour le contrôle du débit de gaz selon la revendication 1, **caractérisée en ce que** le moteur (M) se trouve disposé en dehors du corps de vanne (10).
